(19) **Europäisches Patentamt European Patent Office Office européen des brevets**

(11) **EP 1 739 389 B1**

(12) **FASCICULE DE BREVET EUROPEEN**

(45) Date de publication et mention
de la délivrance du brevet:
**23.01.2008 Bulletin 2008/04**

(51) Int Cl.:
***G01B 21/20*** *(2006.01)*     *G01M 13/04* *(2006.01)*

(21) Numéro de dépôt: **06115741.8**

(22) Date de dépôt: **20.06.2006**

(54) **Procédé de contrôle du profil de la zone de raccordement entre la partie cylindrique et la dépouille d'un rouleau pour palier à roulement de turbomachine**

Verfahren zur Kontrolle des Profils der Verbindungszone zwischen dem zylindrischen Teil und der Verjüngung einer Trommel für Wälzlager von Strömungsmaschinen

Testing process for the coupling zone between the cylindrical part and the tapering of a roller for turbomachine antifriction bearings

(84) Etats contractants désignés:
**DE FR GB NL SE**

(30) Priorité: **29.06.2005 FR 0506628**

(43) Date de publication de la demande:
**03.01.2007 Bulletin 2007/01**

(73) Titulaire: **SNECMA**
**75015 Paris (FR)**

(72) Inventeurs:
• **Dusserre-Telmon, Guy**
**77115, Sivry-Courtry (FR)**

• **Leeder, Laurent**
**91250, Saint-Germain Les Corbeil (FR)**

(74) Mandataire: **Boura, Olivier et al**
**Cabinet Beau de Loménie**
**158, rue de l'Université**
**75340 Paris Cedex 07 (FR)**

(56) Documents cités:
| | |
|---|---|
| **EP-A- 1 111 334** | **CA-A1- 2 286 939** |
| **DE-A1- 4 134 690** | **DE-A1- 19 954 734** |
| **US-A- 3 699 318** | **US-A- 4 771 549** |
| **US-A- 5 041 988** | |

**Description**

Arrière-plan de l'invention

La présente invention se rapporte au domaine général du contrôle de la qualité du profil des rouleaux cylindriques utilisés dans les paliers à roulement de turbomachine.

Les paliers à roulement sont couramment utilisés dans le domaine aéronautique. Dans une turbomachine, les paliers à roulement permettent notamment de supporter en rotation un premier arbre par rapport à un second arbre coaxial au premier. De tels paliers sont essentiellement constitués de billes ou de rouleaux cylindriques retenus dans des pistes de roulement formées par des bagues extérieure et intérieure. On utilise généralement des paliers à billes pour tenir aux charges axiales et des paliers à rouleaux pour tenir aux charges radiales de la turbomachine.

Les roulements des paliers utilisés dans une turbomachine, notamment les rouleaux cylindriques, sont soumis à de nombreuses contraintes mécaniques. Bien que le nombre de défaillances relevées soit plutôt faible, il est cependant devenu nécessaire d'améliorer la fiabilité des paliers à rouleaux en particulier en contrôlant le profil de ces rouleaux. Le contrôle de la fiabilité d'un rouleau cylindrique de palier passe notamment par l'analyse du profil général du rouleau. Cette analyse peut être réalisée à l'aide d'instruments standards de mesure de forme et de surface, telles que les machines de rugosité équipée d'un capteur inductif à diamant ou à laser par exemple.

En pratique, les rouleaux cylindriques des paliers sont dépouillés à leurs extrémités afin d'éviter les sur-contraintes de bord. Les zones de raccordement entre ces deux dépouilles et la partie cylindrique des rouleaux peuvent également engendrer des contraintes de contact inadmissibles en terme de fiabilité du rouleau. Or, les équipements standards de mesure ne permettent pas de contrôler ces zones de raccordement. En effet, la plupart de ces instruments se limitent à la mesure de profils simples et uniques (tels que des profils plans, circulaires, sphériques ou cylindriques) et ne permettent pas de traiter de manière fiable des profils mixtes (combinaisons de profils simples) qui sont associés aux zones de raccordement entre les dépouilles et la partie cylindrique des rouleaux. Aussi, le contrôle de la fiabilité d'un rouleau cylindrique de palier ne comporte aucune exigence sur de telles zones de raccordement.

Document US 5 041 988 A décrit une méthode pour mesurer le contour et la rugosité d'un objet incurvé, qui consiste à réaliser une mesure et à calculer une courbe cubique, représentant le profil incurvé, en utilisant la méthode des moindres carrés. Cette courbe est soustraite des données mesurées pour obtenir des informations sur la rugosité.

Objet et résumé de l'invention

La présente invention a donc pour but principal de pallier de tels inconvénients en proposant un procédé permettant de contrôler le profil de la zone de raccordement entre la partie cylindrique et la dépouille d'un rouleau de palier à roulement.

Le profil de surface d'un rouleau pour palier à roulement de turbomachine est délimité géométriquement par au moins une première zone correspondant à la dépouille du rouleau, au moins une deuxième zone correspondant au raccordement entre la partie cylindrique et la dépouille du rouleau, et une troisième zone correspondant à la partie cylindrique du rouleau. Selon invention, le procédé de contrôle du profil de la zone de raccordement entre la partie cylindrique et la dépouille du rouleau consiste à réaliser une mesure du profil de surface du rouleau, à partir d'un calcul de la dérivée première du profil mesuré, calculer pour chacune desdites zones géométriques du rouleau des segments de droite modélisant la dérivée première du profil mesuré afin de filtrer les perturbations qui se superposent au profil mesuré, calculer les rayons de courbure du profil de surface du rouleau en effectuant la dérivée première des segments de droite, et comparer les rayons de courbure calculés à des valeurs de seuil prédéfinies afin d'en contrôler la continuité.

Le procédé selon l'invention permet de réaliser une caractérisation du profil du rouleau grâce à un simple traitement des points du profil mesuré. Il est ainsi possible de réaliser un contrôle fiable de la qualité du profil d'un rouleau, et notamment de la qualité de la zone de raccordement entre la dépouille et la partie cylindrique du rouleau.

Selon une disposition avantageuse de l'invention, l'étape de calcul des segments de droite consiste à choisir un profil de surface théorique du rouleau, calculer la dérivée première du profil théorique afin d'obtenir pour chacune des zones géométriques du rouleau des segments de droite théoriques, calculer la distance entre la dérivée première du profil mesuré et les segments de droite théoriques, et calculer le coefficient directeur et l'ordonnée à l'origine de chaque segment de droite par minimisation de la distance entre la dérivée première du profil mesuré et les segments de droite théoriques.

Dans ce cas, l'étape de minimisation de la distance entre la dérivée première du profil mesuré et les segments de droite théoriques est de préférence réalisée par la méthode des moindres carrés. Le profil de surface théorique de la première zone géométrique du rouleau peut être un arc de cercle, celui de la deuxième zone géométrique du rouleau un autre arc de cercle et celui de la troisième zone géométrique du rouleau peut être rectiligne.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est un schéma montrant différentes étapes de mise en oeuvre d'un procédé selon l'invention ; et
- les figures 2A à 2C représentent différentes étapes d'un exemple d'application du procédé selon l'invention.

Description détaillée d'un mode de réalisation

Dans la description qui suit, il est envisagé le cas du contrôle du profil de surface d'un rouleau cylindrique pour palier à roulement de turbomachine. L'invention serait toutefois applicable au contrôle du profil de surface de pièces de turbomachine autres que des rouleaux, par exemple des pieds d'aubes, dont la maîtrise du profil est essentielle.

Procédé de contrôle de profil de surface

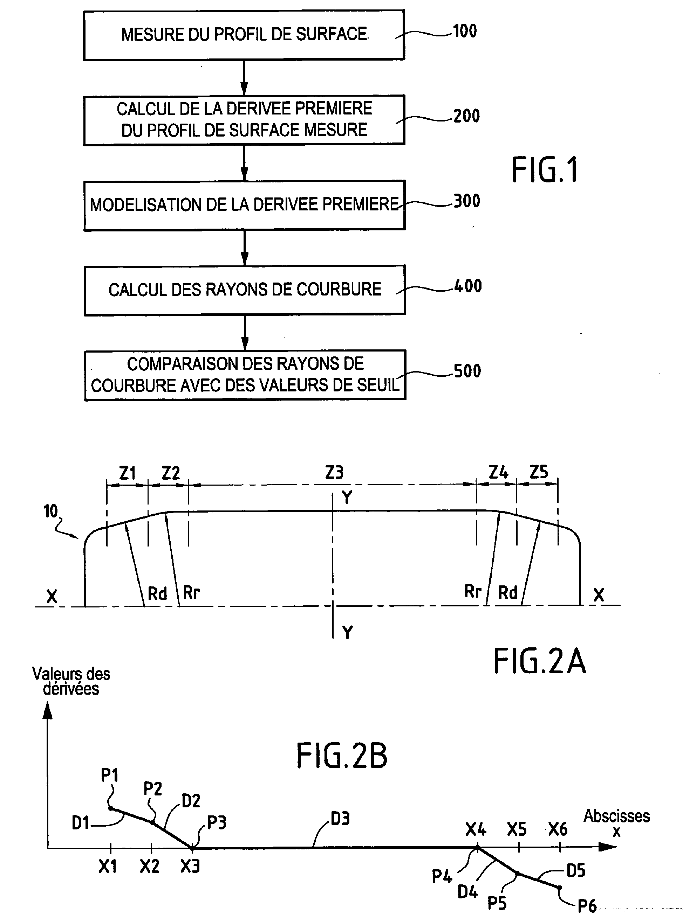

On se réfèrera d'abord à la figure 1 qui représente les étapes d'un mode particulier de réalisation d'un procédé de contrôle de profil selon l'invention.

De manière générale, le procédé de contrôle de profil selon l'invention peut être mis en oeuvre au moyen d'un système informatique telle que notamment une station de travail informatique équipée d'un logiciel de traitement de données numériques et reliée à un instrument de mesure du profil de surface d'une pièce géométrique.

On considère au préalable que le profil de surface d'un rouleau cylindrique de palier à roulement peut être délimité géométriquement par au moins une première zone correspondant à la dépouille du rouleau, une deuxième zone correspondant au raccordement entre la partie cylindrique et la dépouille dudit rouleau, et une troisième zone correspondant à la partie cylindrique du rouleau.

Selon une première étape (100) du procédé, l'opérateur réalise une mesure du profil de surface du rouleau cylindrique à contrôler. Cette mesure peut être obtenue à l'aide d'une machine de rugosité standard, telle qu'un appareil de mesure à capteur inductif à diamant ou à laser par exemple. Dans ces appareils, un capteur est fixé à un bras de support mobile pouvant se déplacer de telle sorte que le capteur suive le profil de surface du rouleau à contrôler.

Le profil de surface mesuré se présente sous la forme de signaux indiquant la position du capteur pendant son trajet le long de la surface du rouleau. Ces signaux sont transmis à la station de travail informatique qui est reliée au capteur afin d'y être traités numériquement pour obtenir une pluralité de points de coordonnées géométriques Ni schématisant le profil géométrique de surface du rouleau à contrôler. Les points $N_i$ sont équidistants d'un nombre entier constant de pas de mesure et sont un nombre n (par exemple de l'ordre de 8000).

A partir de ces points géométriques ainsi obtenus, l'étape suivante (200) consiste à effectuer une dérivée première du profil de surface mesuré, c'est-à-dire des n points géométriques Ni constituant le profil. Cette étape peut être réalisée à l'aide d'un logiciel de calcul équipant la station de travail informatique et permet d'obtenir les coordonnées géométriques $N'_i$ des n points.

Lors d'une autre étape (300) du procédé qui sera détaillée ultérieurement, pour chacune des zones géométriques du rouleau précédemment définies, des segments de droite modélisant la dérivée première du profil mesuré sont calculés. Le calcul, qui peut être réalisée à l'aide du logiciel de calcul équipant la station de travail informatique, permet de filtrer les perturbations de haute fréquence systématiques et aléatoires qui se superposent au profil mesuré.

Toujours à l'aide du logiciel de calcul équipant la station de travail informatique, les rayons de courbure du profil de surface du rouleau à contrôler sont calculés (étape 400) en effectuant la dérivée première des segments de droite calculés lors de l'étape précédente.

Enfin, selon une dernière étape (500) du procédé de contrôle, les rayons de courbure ainsi calculés, et notamment ceux de la zone de raccordement entre la partie cylindrique et les dépouilles du rouleau, sont comparés à des valeurs de seuil prédéfinies. En fonction des résultats obtenus lors de cette comparaison, l'opérateur pourra choisir de conserver ou non le rouleau pour l'utiliser dans un palier à roulement de turbomachine. Les valeurs de seuil sont prédéfinies par expérience. Elles sont choisies en fonction de l'emplacement du roulement dans la turbomachine, de ses caractéristiques géométriques, des matériaux, et des sollicitations mécaniques extérieures et notamment du niveau de pression de contact entre le rouleau le plus chargé et les pistes de roulement.

Ces valeurs de seuil peuvent par exemple s'exprimer sous la forme d'un rayon de courbure minimum pour les zones correspondant au raccordement entre la partie cylindrique et les dépouilles du rouleau. En dessous de ce rayon de courbure minimum, le rouleau cylindrique est exclu de la sélection. Un tel rayon de courbure minimum est défini selon l'expérience. A titre d'exemple, pour un rouleau cylindrique ayant une longueur axiale de l'ordre de 14 mm, le rayon de courbure minimum peut être de l'ordre de 100 mm.

Un autre exemple de mode de sélection, qui peut s'additionner au précédent, peut consister à comparer entre eux les rayons de courbure des deux zones de raccordement entre la partie cylindrique et les dépouilles du rouleau. En cas d'écart trop important entre ces deux rayons de courbure résultant d'une dissymétrie du rouleau, le rouleau est exclu de la sélection.

Modélisation de la dérivée première du profil mesuré

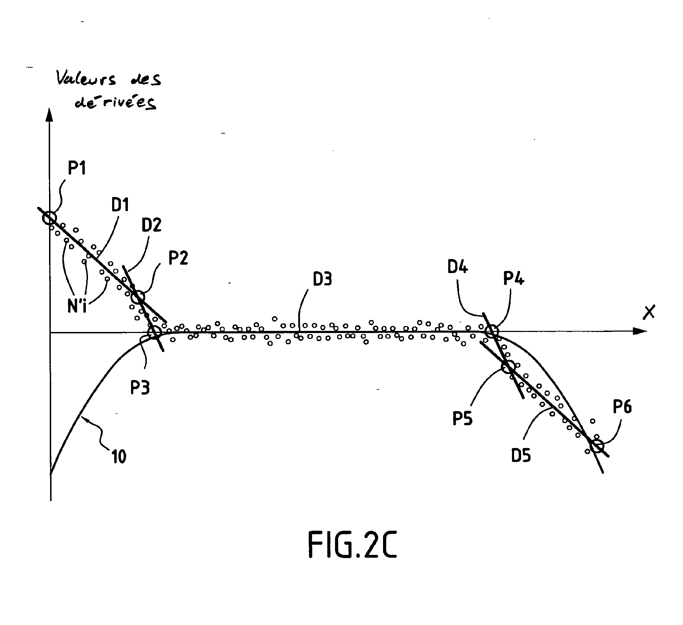

En liaison avec les figures 2A, 2B et 2C, on décrira maintenant un mode particulier de réalisation l'étape (300) de modélisation de la dérivée première du profil de surface mesuré. Comme indiqué précédemment, cette étape est réalisée à l'aide d'un logiciel de calcul équipant la station de travail informatique.

La première étape de cette modélisation consiste à choisir un profil de surface théorique du rouleau cylindrique à contrôler. Le profil théorique du rouleau est choisi en fonction des dimensions du rouleau à contrôler.

La figure 2A représente de façon schématique un exemple de profil de surface partiel et théorique d'un rouleau cylindrique 10 pour palier à roulement de turbomachine. Un tel rouleau cylindrique est symétrique, d'une part par rapport à son axe principal X-X, et d'autre part par rapport à un axe médian Y-Y perpendiculaire à son axe principal X-X.

Le profil de surface 10 de ce rouleau est délimité géométriquement par : deux premières zones $Z_1$ et $Z_5$ correspondant aux deux dépouilles du rouleau ; deux deuxièmes zones $Z_2$ et $Z_4$ correspondant chacune au raccordement entre la partie cylindrique et l'une des dépouilles du rouleau ; et une troisième zone $Z_3$ correspondant à la partie cylindrique du rouleau. Les premières zones $Z_1$ et $Z_5$ et les deuxièmes zones $Z_2$ et $Z_4$ sont symétriques par rapport à l'axe médian Y-Y du rouleau.

Par exemple, pour un rouleau de longueur de l'ordre de 14 mm, les zones géométriques $Z_1$ à $Z_5$ sont choisies de la manière suivante.

Les premières zones symétriques $Z_1$ et $Z_5$ ont un profil théorique circulaire avec un rayon Rd de 500 mm environ.

Les deuxièmes zones symétriques $Z_2$ et $Z_4$ ont également un profil théorique circulaire avec un rayon Rr compris entre 100 mm et 200 mm environ. La longueur axiale de ces deuxièmes zones est comprise entre 0,7 et 2,1 mm.

Quant à la troisième zone $Z_3$, elle a un profil théorique rectiligne et sa longueur axiale finale dépend de la valeur des rayons de raccordement qui sont tangents entre les dépouilles et la partie cylindrique. Après réalisation par rayonnage des rayons de raccordement, pour des valeurs Rr comprises entre 100 mm et 200 mm environ, la partie rectiligne finale possède une longueur axiale comprise entre 4,3 mm et 7,3 mm contre une longueur initiale avant rayonnage comprise entre 5,6 et 8,2 mm. Le procédé de contrôle selon l'invention permet ainsi de re-calculer la longueur cylindrique axiale initiale des rouleaux avant l'élimination des angles vifs par la réalisation des rayons de raccordement.

L'étape suivante consiste à calculer la dérivée première du profil théorique afin d'obtenir pour chacune des zones géométriques $Z_1$ à $Z_5$ du rouleau des segments de droite théoriques.

La figure 2B illustre le résultat d'un tel calcul. Les cinq segments de droite $D_1$ à $D_5$ délimités par les points frontières $P_1$ à $P_6$ représentent la dérivée première des zones géométriques respectives $Z_1$ à $Z_5$.

L'abscisse géométrique des points frontières $P_1$ à $P_6$ est déterminée à partir de la longueur axiale prédéfinie des zones géométriques $Z_1$ à $Z_5$ respectives. Quant à leur ordonnée géométrique, elle est calculée à partir de la formule géométrique représentant le profil théorique des zones $Z_1$ à $Z_5$ respectives (segment de droite pour la zone $Z_3$ et arcs de cercle pour les autres zones).

Les segments de droite $D_1$ à $D_5$ peuvent être représentés chacun par les équations ($D_i$) suivantes : $y'_i = a_i x + b_i$ (avec i variant de 1 à 5). Le coefficient directeur $a_i$ et l'ordonnée à l'origine $b_i$ de chaque segment de droite $D_i$ sont calculés à l'aide des coordonnées géométriques des points frontières $P_1$ à $P_6$ précédemment calculées.

L'étape suivante de la modélisation consiste à calculer, pour chaque zone géométrique $Z_1$ à $Z_5$ du profil théorique, la distance globale $\varepsilon$ entre les n points géométriques $N'_i$ constituant la dérivée première du profil mesuré lors d'une étape antérieure (200) et les segments de droite théoriques $D_1$ à $D_5$ (figure 2C).

Si l'on considère la zone $Z_i$ délimitée entre les points $P_i$ et $P_{i+1}$, elle possède $[n_{i+1} - n_i + 1]$ points constituant le profil mesuré. Le calcul de la distance $\varepsilon_i$ entre ces points et le segment de droite ($D_i$) donne alors :

$$\varepsilon_i = \sum_{j=n_i}^{n_{i+1}} \left[ y'_j - \left( a_i x_j + b_i \right) \right]^2$$

Le calcul de la distance globale $\varepsilon$ entre les n points géométriques $N_i$ constituant la dérivée première du profil mesuré et les segments de droite théoriques $D_1$ à $D_5$ est alors obtenue par l'équation suivante :

$$\varepsilon = \sum_{i=1}^{5} \varepsilon_i = \sum_{i=1}^{5} \sum_{j=n_i}^{n_{i+1}} \left[ y'_j - \left( a_i x_j + b_i \right) \right]^2$$

L'étape suivante de modélisation consiste à minimiser la distance $\varepsilon$ entre la dérivée première du profil mesuré et les segments de droite théoriques par la méthode des moindres carrés. A cet effet, si l'on considère la distance $\varepsilon$ comme une fonction des coefficients $a_i$ et $b_i$ (avec i variant de 1 à 5), sa valeur sera minimale pour les valeurs de coefficients $A_i$ et $B_i$ telles que :

$$\frac{\partial \varepsilon}{\partial a_i} = 0 \quad \text{et} \quad \frac{\partial \varepsilon}{\partial b_i} = 0$$

pour i variant de 1 à 5

La résolution de ces dix équations à dix inconnues permet d'obtenir la valeur des coefficients $A_i$ et $B_i$ qui représentent la minimisation de la distance $\varepsilon_i$ sur chacune des zones géométriques $Z_1$ à $Z_5$. Ces nouveaux coefficients $A_i$ et $B_i$ sont les nouveaux coefficient directeur $A_i$ et ordonnée à l'origine $B_i$ de nouveaux segments de droite $D'_i$ (avec i variant de 1 à 5) pour lesquels la distance avec les n points géométriques $N'_i$ constituant la dérivée première du profil mesuré est minimale.

A partir des nouveaux coefficients $A_i$ et $B_i$ de chaque segment de droite $D'_i$, l'étape suivante consiste à calculer les coordonnées des nouveaux points frontières $P'_1$ à $P'_6$ délimitant les nouveaux segments de droite $D'_i$.

Pour la détermination des coordonnées des nouveaux points frontières $P'_1$ et $P'_6$, le calcul consiste à déterminer l'intersection respective des nouveaux segments de droite $D'_1$ et $D'_5$ avec des droites d'équation $x = X_1$ (où $X_1$ est l'abscisse du point frontière $P_1$) et $x = X_6$ (où $X_6$ est l'abscisse du point frontière $P_6$).

Pour la détermination des coordonnées des autres nouveaux points frontières $P'_2$ à $P'_6$, on considère l'intersection entre les droites $D'_{i-1}$ et $D'_i$ afin d'obtenir les coordonnées suivantes, pour i variant de 2 à 5 :

$$X'_i = \frac{B_{i-1} - B_i}{A_i - A_{i-1}} \quad \text{et} \quad Y'_i = \frac{A_i B_{i-1} - B_i}{A_i - A_{i-1}}$$

où $X'_i$ et $Y'_i$ sont les coordonnées des nouveaux points frontières $P'_2$ à $P'_6$.

L'étape suivante consiste alors à comparer la distance $\varepsilon$ calculée entre la dérivée première du profil mesuré et les segments de droite théoriques avec une distance de convergence $\varepsilon_{conv}$. Si la distance calculée $\varepsilon$ est supérieure à la distance de convergence $\varepsilon_{conv}$, le procédé reprend à l'étape de minimisation de la distance $\varepsilon$ entre la dérivée première du profil mesuré et les nouveaux segments de droite $D'_1$ et $D'_6$. Cette boucle est répétée aussi longtemps que la distance calculée $\varepsilon$ reste supérieure à la distance de convergence $\varepsilon_{conv}$.

Lorsque la distance calculée $\varepsilon$ devient inférieure à la distance de convergence $\varepsilon_{conv}$, le procédé de contrôle selon l'invention reprend à l'étape 400 (figure 1), le coefficient directeur $A_i$ de chaque nouveau segment de droite $D'_1$ et $D'_6$ représentant alors le rayon de courbure de chaque zone géométrique du profil du rouleau cylindrique.

Le choix de la valeur définissant la distance de convergence $\varepsilon_{conv}$ dépend essentiellement de la rugosité de la surface du rouleau cylindrique à contrôler. Le calcul itératif précédemment décrit se poursuit tant que la distance $\varepsilon$ diminue. A partir d'un certain seuil, une légère augmentation de la valeur $\varepsilon$ est repérée, cette augmentation provenant du fait que le calcul de la convergence $\varepsilon$ n'est réalisé qu'aux n points géométriques $N'_i$ représentant la dérivée première du profil mesuré. La valeur de $\varepsilon$ pour laquelle cette augmentation est repérée est enregistrée ($\varepsilon_{min}$). Aux itérations suivantes, le calcul de convergence est alors arrêté lorsque distance $\varepsilon$ devient par exemple inférieure à $\varepsilon_{conv} = 1,001 * \varepsilon_{min}$.

**Revendications**

1. Procédé de contrôle du profil de la zone de raccordement entre la partie cylindrique et la dépouille d'un rouleau (10) pour palier à roulement de turbomachine, le profil de surface dudit rouleau étant délimité géométriquement par au moins une première zone ($Z_1$, $Z_5$) correspondant à la dépouille du rouleau, au moins une deuxième zone ($Z_2$, $Z_4$) correspondant au raccordement entre la partie cylindrique et la dépouille dudit rouleau, et une troisième zone ($Z_3$) correspondant à la partie cylindrique dudit rouleau, **caractérisé en ce qu'**il consiste à :

- réaliser (100) une mesure du profil de surface du rouleau ;
- à partir d'un calcul (200) de la dérivée première du profil mesuré, calculer (300) pour chacune desdites zones géométriques du rouleau des segments de droite modélisant la dérivée première du profil mesuré afin de filtrer les perturbations qui se superposent au profil mesuré ;
- calculer (400) les rayons de courbure du profil de surface du rouleau en effectuant la dérivée première des segments de droite ; et
- comparer (500) les rayons de courbure calculés à des valeurs de seuil prédéfinies afin d'en contrôler la continuité.

**2.** Procédé selon la revendication 1, dans lequel l'étape (300) de calcul des segments de droite consiste à :

- choisir un profil de surface théorique du rouleau ;
- calculer la dérivée première du profil théorique afin d'obtenir pour chacune desdites zones géométriques du rouleau des segments de droite théoriques ;
- calculer la distance entre la dérivée première du profil mesuré et les segments de droite théoriques ; et
- calculer le coefficient directeur et l'ordonnée à l'origine de chaque segment de droite par minimisation de la distance entre la dérivée première du profil mesuré et les segments de droite théoriques.

**3.** Procédé selon la revendication 2, dans lequel l'étape de minimisation de la distance entre la dérivée première du profil mesuré et les segments de droite théoriques est réalisée par la méthode des moindres carrés.

**4.** Procédé selon l'une des revendications 2 et 3, dans lequel le profil de surface théorique de la première zone géométrique ($Z_1$, $Z_5$) du rouleau (10) est un arc de cercle, le profil de surface théorique de la deuxième zone géométrique ($Z_2$, $Z_4$) du rouleau est un autre arc de cercle et le profil de surface théorique de la troisième zone géométrique ($Z_3$) du rouleau est rectiligne.

**Claims**

**1.** A method of inspecting the profile of the connection zone between the cylindrical portion and the taper of a roller (10) for a turbomachine roller bearing, the surface profile of said roller being geometrically defined by at least one first zone ($Z_1$, $Z_5$) corresponding to the taper of the roller, by at least one second zone ($Z_2$, $Z_4$) corresponding to the connection between the cylindrical portion and the taper of said roller, and by a third zone ($Z_3$) corresponding to the cylindrical portion of said roller, the method being **characterized in that** it consists in the steps of:

· taking (100) a measurement of the surface profile of the roller;
· on the basis of a calculation (200) of the first derivative of the measured profile, calculating (300) straight line segments for each of said geometrical zones of the roller, where said straight line segments model the first derivative of the measured profile in order to filter out the disturbances that are superposed on the measured profile;
calculating (400) the radii of curvature of the surface profile of the roller by taking the first derivative of the straight line segments; and
comparing (500) the calculated radii of curvature with predefined threshold values in order to verify continuity thereof.

**2.** A method according to claim 1, in which step (300) of calculating straight line segments consists in:

· selecting a theoretical surface profile for the roller;
· calculating the first derivative of the theoretical profile in order to obtain theoretical straight line segments for each of said geometrical zones of the roller;
· calculating the distance between the first derivative of the measured profile and the theoretical straight line segments; and
· calculating the gradient and the intercept on the ordinate of each straight line segment by minimizing the distance between the first derivative of the measured profile and the theoretical straight line segments.

**3.** A method according to claim 2, in which the step of minimizing the distance between the first derivative of the measured profile and the theoretical straight line segments is performed by the least squares method.

4. A method according to claim 2 or claim 3, in which the theoretical surface profile of the first geometrical zone ($Z_1$, $Z_5$) of the roller (10) is a circular arc, the theoretical surface profile of the second geometrical zone ($Z_2$, $Z_4$) of the roller is another circular arc, and the theoretical surface profile of the third geometrical zone ($Z_3$) of the roller is rectilinear.

**Patentansprüche**

1. Verfahren zur Überprüfung des Profils des Verbindungsbereichs zwischen dem zylindrischen Teil und der Schräge einer Rolle (10) für Wälzlager einer Turbomaschine, wobei das Oberflächenprofil der Rolle durch wenigstens einen ersten Bereich ($Z_1$, $Z_5$), welcher der Schräge der Rolle entspricht, wenigstens einen zweiten Bereich ($Z_2$, $Z_4$), welcher der Verbindung zwischen dem zylindrischen Teil und der Schräge der Rolle entspricht, sowie einen dritten Bereich ($Z_3$), welcher dem zylindrischen Teil der Rolle entspricht, geometrisch begrenzt ist, **dadurch gekennzeichnet, daß** es darin besteht:

   - eine Messung des Oberflächenprofils der Rolle durchzuführen (100);
   - anhand einer Berechnung (200) der ersten Ableitung des gemessenen Profils für jeden der genannten geometrischen Bereiche der Rolle Geradenabschnitte, welche die erste Ableitung des gemessenen Profils modellieren, zu berechnen, um die Störungen zu filtern, die das gemessene Profil überlagern;
   - die Krümmungsradien des Oberflächenprofils der Rolle durch Bilden der ersten Ableitung der Geradenabschnitte zu berechnen (400); und
   - die berechneten Krümmungsradien mit vordefinierten Schwellenwerten zu vergleichen (500), um deren Kontinuität zu überprüfen.

2. Verfahren nach Anspruch 1, bei dem der Schritt (300) zur Berechnung der Geradenabschnitte darin besteht:

   - ein theoretisches Oberflächenprofil der Rolle zu wählen;
   - die erste Ableitung des theoretischen Profils zu berechnen, um für jeden der geometrischen Bereiche der Rolle theoretische Geradenabschnitte zu erhalten;
   - den Abstand zwischen der ersten Ableitung des gemessenen Profils und den theoretischen Geradenabschnitten zu berechnen; und
   - den Richtungskoeffizienten und die Ordinate am Anfang jedes Geradenabschnittes durch Minimieren des Abstandes zwischen der ersten Ableitung des gemessenen Profils und den theoretischen Geradenabschnitten zu berechnen.

3. Verfahren nach Anspruch 2, bei dem der Schritt der Minimierung des Abstandes zwischen der ersten Ableitung des gemessenen Profils und den theoretischen Geradenabschnitten mittels der Methode der kleinsten Fehlerquadrate durchgeführt wird.

4. Verfahren nach einem der Ansprüche 2 und 3, bei dem das theoretische Oberflächenprofil des ersten geometrischen Bereichs ($Z_1$, $Z_5$) der Rolle (10) ein Kreisbogen ist, das theoretische Oberflächenprofil des zweiten geometrischen Bereichs ($Z_2$, $Z_4$) der Rolle ein weiterer Kreisbogen ist und das theoretische Oberflächenprofil des dritten geometrischen Bereichs ($Z_3$) der Rolle geradlinig ist.

| MESURE DU PROFIL DE SURFACE. | 100 |

| CALCUL DE LA DERIVEE PREMIERE DU PROFIL DE SURFACE MESURE | 200 |

| MODELISATION DE LA DERIVEE PREMIERE | 300 |

| CALCUL DES RAYONS DE COURBURE | 400 |

| COMPARAISON DES RAYONS DE COURBURE AVEC DES VALEURS DE SEUIL | 500 |

**FIG.1**

**FIG.2A**

**FIG.2B**

FIG.2C

R

# EP 1 739 389 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5041988 A